# EUROPÄISCHE PATENTANMELDUNG

(11) **EP 1 747 937 A1**
(43) Veröffentlichungstag der Anmeldung: **31.01.2007**
(21) Anmeldenummer: 05016600.8
(22) Anmeldetag: 29.07.2005
(51) Int. Cl.: B60Q 1/56, B60Q 1/26, E05B 65/20, E05B 17/10

(54) **Beleuchtungseinheit mit Schaltfunktion**

(71) Anmelder: Delphi Technologies, Inc., Troy, MI 48007 (US)
(72) Erfinder: Ludwig, Peter, 46514 Schermbeck (DE); Stanitzok, Ewald, 58256 Ennepetal (DE); Kortwig, Carsten, 42929 Wermeleskirchen (DE); Dubbert, Stefan, 58332 Schwelm (DE)
(74) Vertreter: Manitz, Finsterwald & Partner GbR

(57) **Zusammenfassung**

Die Erfindung betrifft eine Beleuchtungseinheit mit Schaltfunktion, die eine Leiterplatte (5) mit wenigstens einem Leuchtelement (1) und wenigstens einem Schaltelement (3) und ein Lichtverteilerelement (9) aufweist. Außerdem ist ein flexibler Abstandshalter (7) zwischen Leiterplatte (5) und Lichtverteilerelement (9) mit Aussparungen (19,21) zur Aufnahme der Leuchtelemente (1) und Schaltelemente (3) vorgesehen.

## Beschreibung

Die Erfindung betrifft eine Beleuchtungseinheit mit Schaltfunktion mit Leuchtelementen und Schaltelementen.

Eine Kennzeichenleuchte und ein Öffner für eine Fahrzeugklappe, zum Beispiel die Kofferraumklappe oder Heckklappe werden heutzutage oftmals kombiniert. Die Funktion der Kennzeichenleuchte und des Kofferraumöffners werden dabei zum Beispiel in einer massiven Kunststoffleiste aus sehr vielen unterschiedlichen Bauteilen zusammengesetzt, zum Beispiel Soffitten, Blechteile, Schrauben, Platinen mit Schaltern, Abdichtungen etc. Dies ist aus Gründen der Abdichtung gegen Feuchtigkeit und zum Herstellen eines gut einzubauenden Gesamtmoduls notwendig. Dabei entsteht ein hoher Montageaufwand und Kosten nicht nur durch die Vielzahl an Bauteilen, sondern auch durch die erhöhten Montagekosten. Außerdem hat eine solche Einheit ein hohes Gewicht.

Aufgabe der vorliegenden Erfindung ist es, eine Beleuchtungseinheit mit Schaltfunktion anzugeben, die mit einer geringeren Anzahl von einzelnen Elementen auskommt und einfach herstellbar und montierbar ist.

Diese Aufgabe wird mit einer Beleuchtungseinheit mit den Merkmalen des Anspruches 1 gelöst. Anspruch 9 ist auf eine Kennzeichenbeleuchtung mit einem erfindungsgemäßen Beleuchtungselement und Anspruch 11 auf eine Öffnungsvorrichtung für eine Fahrzeugklappe mit einem erfindungsgemäßen Beleuchtungselement gerichtet.

Eine erfindungsgemäße Beleuchtungseinheit weist eine Leiterplatte mit Leuchtelementen und Schaltelementen auf. Es ist ein Lichtverteilerelement vorgesehen, das die Leuchtwirkung der einzelnen Leuchtelemente verteilt.

Die erfindungsgemäße Beleuchtungseinheit weist einen Abstandshalter zwischen Leiterplatte und Lichtverteilerelement mit Aussparungen zur Aufnahme der Leuchtelemente und Schaltelemente auf. Dieser Abstandshalter schützt zum einen die Leuchtelemente und Schaltelemente und ermöglicht eine sehr einfache Montage. Der flexible Abstandshalter muss nur auf die Leiterplatte aufgelegt und befestigt werden, wobei die Aussparungen die Leuchtelemente und Schaltelemente aufnehmen, die auf der Leiterplatte befestigt sind. Auf den so befestigten Abstandshalter muss nur das Lichtverteilerelement aufgebracht werden. Erfindungsgemäß ist das Lichtverteilerelement derart angeordnet und/oder ausgestaltet, dass es von außen applizierten Druck an die Schaltelemente weitergibt. Dazu ist der Abstandshalter flexibel ausgestaltet, um eine Einwirkung des Lichtverteilerelementes auf die Schaltelemente zu ermöglichen.

Mit der erfindungsgemäßen Beleuchtungseinheit kann also auf einfache Weise ein elektrischer Schaltvorgang vorgenommen werden. Es muss einfach auf das Lichtverteilerelement gedrückt werden, um ein Schalten zumindest eines der Schaltelemente zu ermöglichen.

Die erfindungsgemäße Beleuchtungseinheit mit Schaltfunktion weist zumindest ein Leuchtelement und zumindest ein Schaltelement auf. Besonders vorteilhaft für eine gleichmäßige Beleuchtung ist eine Beleuchtungseinheit mit mehreren Leuchtelementen. Um eine gleichmäßige Schaltwirkung unabhängig davon zu erhalten, an welcher Stelle auf ein zum Beispiel lang gestrecktes Lichtverteilerelement zum Schalten gedrückt wird, sind vorteilhafterweise mehrere Schaltelemente vorgesehen, die so miteinander verschaltet sind, dass das Schalten eines einzelnen Schaltelementes bereits die gewünschte Schaltfunktion auslöst. Zum Beispiel können mehrere Schaltelemente und Leuchtelemente abwechselnd in einer Reihe angeordnet sein.

Bei anderen Ausgestaltungen sind mehrere Schaltfunktionen auslösbar, wobei die einzelnen Schaltelemente nicht wie oben zur Auslösung derselben Schaltfunktion verschaltet sind. So können zum Beispiel die Schaltelemente derart angeordnet und verschaltet sein, dass bei Druck auf eine Seite eines lang gestreckten Lichtverteilerelementes eine erste Schaltfunktion ausgelöst wird und bei Druck auf die andere Seite eines lang gestreckten Lichtverteilerelementes eine zweite Schaltfunktion ausgelöst wird.

Je nach Auswahl des Materiales und der Flexibilität des Abstandshalters kann das Schaltempfinden festgelegt werden. Geeignet sind zum Beispiel elastische Materialien wie Schaumstoff oder Ähnliches. Der Abstandshalter kann aus mehreren Einzelteilen bestehen, die die Schaltelemente und Leuchtelemente nicht notwendigerweise vollständig umgeben und zum Beispiel nur zwischen den Schaltelementen bzw. Leuchtelementen vorgesehen sind. Besonders gleichmäßig ist die Schaltwirkung und der Schutz, den das Schaummaterial den Schaltelementen bzw. Leuchtelementen bietet, wenn diese von dem flexiblen Abstandshalter in lateraler Richtung vollständig umgeben sind. Ein derartiger flexibler Abstandshalter lässt sich besonders einfach als vorgestanzte Schaumstoffmatte realisieren.

Die erfindungsgemäße Beleuchtungseinheit kann zum Beispiel als Kennzeichenbeleuchtung mit integrierter Schaltfunktion im automobilen Bereich eingesetzt werden. Die Schaltfunktion kann dann zum Beispiel als Öffner für eine Fahrzeugklappe, zum Beispiel die Kofferraumklappe oder eine Heckklappe dienen. Die Einheit kann auch den Klappengriff bilden oder umfassen.

Die Erfindung ermöglicht also u.a. die Realisierung einer einfachen Kennzeichenbeleuchtung mit Fahrzeugklappenöffnungsvorrichtung.

Der Abstandshalter und die Leiterplatte bzw. der Abstandshalter und das Lichtverteilerelement können auf unterschiedliche Weise miteinander verbunden werden. Eine besonders einfache Ausgestaltung sieht die Verwendung von doppelseitigem Klebeband vor. Besonders sicher ist die Verwendung des doppelseitigen Klebebandes jeweils auf im Wesentlichen der gesamten dem zu verklebenden Element zugewandten Oberfläche des Abstandshalters. Diese Ausgestaltung erleichtert die Montage, da das doppelseitige Klebeband einfach zu positionieren ist.

Vorteilhafterweise ist die Beleuchtungseinheit mit einer Grundplatte auf der dem Lichtverteilerelement abgewandten Seite der Leiterplatte versehen, die zum Beispiel aus Kunststoff gefertigt sein kann. Eine solche Grundplatte kann zum Beispiel die Befestigung der Einheit am Fahrzeug übernehmen und dazu zum Beispiel Schrauben oder Rastelemente aufweisen.

Zum Schutz gegen äußere Einflüsse oder Beschädigungen kann die gesamte Beleuchtungseinheit von elastischer Vergussmasse umgeben sein. Die Leuchtelemente und Schaltelemente werden dabei durch den flexiblen Abstandshalter vor der Vergussmasse geschützt. Die Vergussmasse dient insbesondere zum Beispiel auch als Feuchtigkeitsabdichtung der Leuchtelemente und der Schaltelemente.

Die erfindungsgemäße Beleuchtungseinheit kombiniert also eine Beleuchtungs-, Schalt- und Dichtfunktion in einer Einheit. Die Anzahl der benötigten Bauteile ist im Vergleich zu herkömmlichen Realisierungen sehr gering und sowohl die Herstellung als auch die Montage sind sehr einfach. Außerdem ist die erfindungsgemäße Beleuchtungseinheit sehr kompakt.

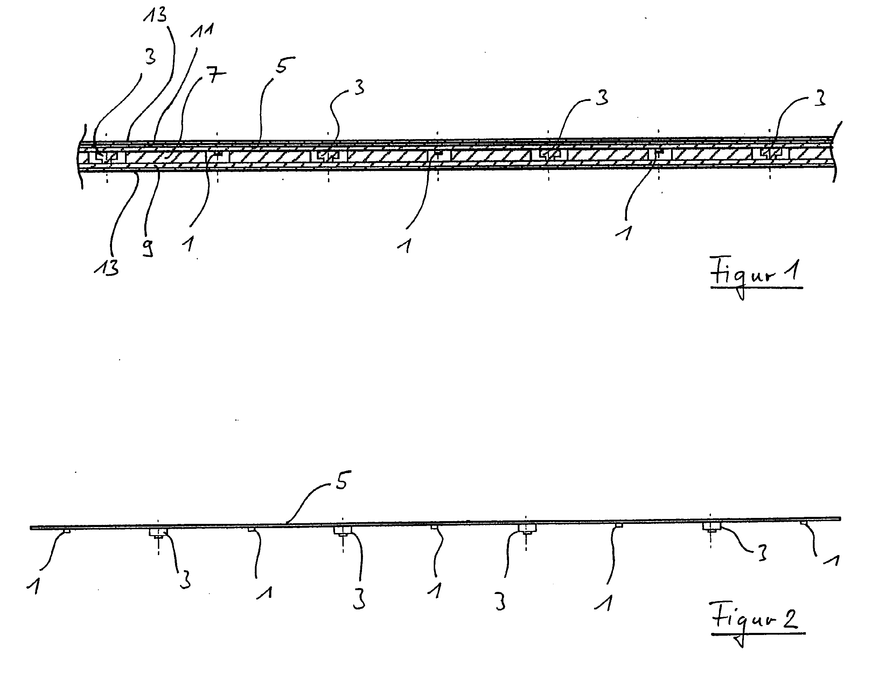

Eine Ausführungsform der Erfindung wird anhand der beiliegenden Figuren im Detail erläutert. Dabei zeigt
- Fig. 1: einen Ausschnitt aus einem Querschnitt einer erfindungsgemäßen Kennzeichenbeleuchtung mit Schaltfunktion,
- Fig. 2: eine Leiterplatte, wie sie in der Ausführungsform der Fig. 1 zum Einsatz kommt, und

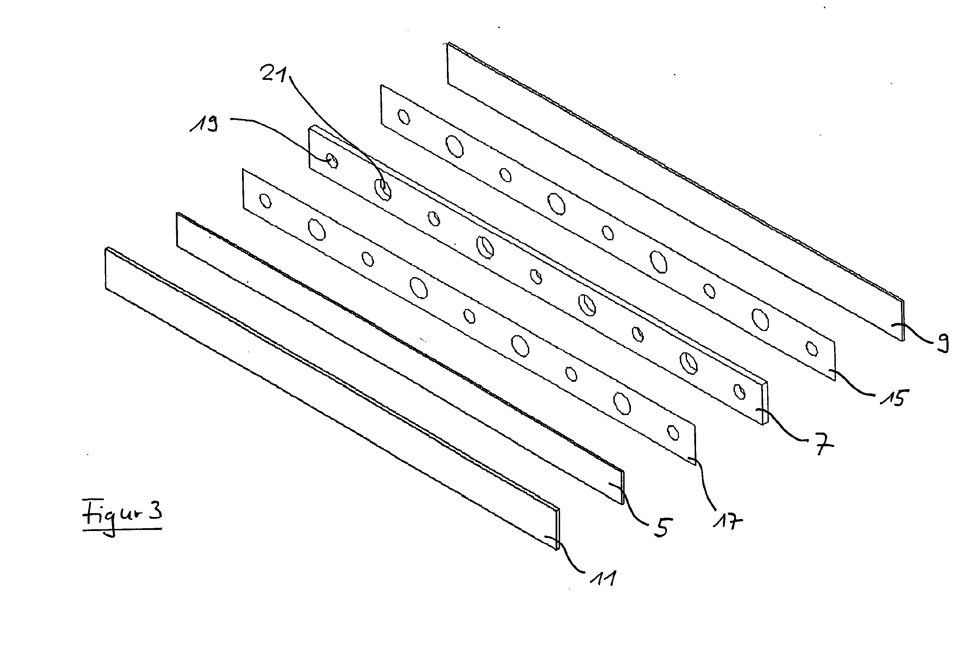

- Fig. 3: eine Teilexplosionszeichnung der Ausführungsform der Fig. 1.

Auf der Leiterplatte 5, die zum Beispiel eine flexible Leiterplatte oder eine Platine (FPC oder PCB) sein kann, sind Leuchtelemente, wie zum Beispiel Leuchtdioden 1, und Schalter zum Beispiel in Form von Mikrotastern 3 befestigt und kontaktiert. Mit einem doppelseitigen Klebeband 17 ist auf der Oberseite der Leiterplatte 5 ein Schaumstoffabstandshalter 7 festgeklebt, in dem Aussparungen 19 bzw. 21 für die Leuchtdioden 1 bzw. den Mikrotaster 3 vorgesehen sind. Der Schaumstoffabstandshalter 7 kann zum Beispiel eine vorgestanzte Matte sein, die einfach herzustellen und zu montieren ist. Auf dem Abstandshalter 7 ist ebenfalls mit Hilfe eines doppelseitigen Klebebandes 15 das Lichtverteilerelement 9 vollflächig aufgeklebt. Es handelt sich bei dem Lichtverteilerelement 9 zum Beispiel um ein lichtverteilendes Bauteil, welches über geeignete optische Oberflächen die gewünschte Lichtabstrahlung erzielt. In den doppelseitigen Klebebändem 17, 15 befinden sich registergerecht mit den Aussparungen 19, 21 Öffnungen zum Durchtritt der Leuchtdioden 1 bzw. der Mikrotaster 3.

Die so gebildete Einheit wird auf eine Grundplatte 11 montiert, die zum Beispiel zur Befestigung an einem Fahrzeug dient und in nicht dargestellter Weise entsprechende Befestigungsvorrichtungen wie Schraublöcher oder Rastvorrichtungen aufweist.

Die gesamte Einheit ist in elastische Vergussmasse 13 eingegossen, um Schutz gegen Feuchtigkeit oder Beschädigungen zu bieten und ist zum Beispiel nur einige Millimeter hoch.

Die Mikrotaster 3 sind derart verschaltet, dass bei Schalten nur eines Mikrotasters 3 die gewünschte Schaltfunktion, zum Beispiel das Öffnen einer Kofferraumklappe, durchgeführt wird.

Sinnvollerweise sind die Mikrotaster 3 und die Leuchtdioden 1 über die gesamte Länge der Einheit verteilt, so dass bei Druck an beliebiger Stelle auf das Lichtverteilerelement 9 die Schaltfunktion ausgeführt wird und die gesamte Einheit durch die Leuchtdioden 1 gleichmäßig beleuchtet wird.

Wird zum Beispiel die Beleuchtung des Kraftfahrzeuges eingeschaltet, so werden auch die Leuchtdioden 1 mit Strom versorgt. Durch ihre Verteilung über die gesamte Beleuchtungseinheit und mit Hilfe des Lichtverteilerelementes 9 wird erreicht, dass eine den Gesetzesvorgaben entsprechende Beleuchtung des Kennzeichens möglich ist, an dessen Kante die Beleuchtungseinheit zum Beispiel befestigt ist.

Druck auf das Lichtverteilerelement 9 in einem Bereich bewirkt durch die Flexibilität des Schaumstoffabstandshalters 7 in diesem Bereich ein Schalten eines entsprechenden Mikrotasters 3, wodurch die gewünschte Schaltfunktion, zum Beispiel das Öffnen der Kofferraumplatte, bewirkt wird.

Die Flexibilität des Abstandshalters 7 gewährleistet, dass die Einheit wieder in ihre ursprüngliche Form zurückkehrt. Die Leuchtelemente und die Schaltelemente sind durch die Vergussmasse und das Schaummaterial gegen äußere Einflüsse, insbesondere Feuchtigkeit geschützt.

### Bezugszeichenliste

- 1: Leuchtdiode
- 3: Mikrotaster
- 5: Leiterplatte
- 7: Abstandshalter
- 9: Lichtverteilerelement
- 11: Grundplatte
- 13: Vergussmasse
- 15, 17: doppelseitiges Klebeband
- 19,21: Aussparungen

## Patentansprüche

1. Beleuchtungseinheit mit Schaltfunktion, die folgendes aufweist:
- eine Leiterplatte (5) mit wenigstens einem Leuchtelement (1) und wenigstens einem Schaltelement (3),
- ein Lichtverteilerelement (9) und
- einen flexiblen, vorzugsweise einstückigen Abstandshalter (7) zwischen Leiterplatte (5) und Lichtverteilerelement (9) mit Aussparungen (19, 21) zur Aufnahme des wenigstens einen Leuchtelementes (1) und des wenigstens einen Schaltelementes (3) , wobei das Lichtverteilerelement (9) derart angeordnet und/oder ausgestaltet ist, dass es von außen applizierten Druck an die Schaltelemente (3) weitergibt.

2. Beleuchtungseinheit nach Anspruch 1, bei der der Abstandshalter (7) und die Leiterplatte (5) und/oder der Abstandshalter (7) und das Lichtverteilerelement (9) mit doppelseitigem Klebeband (17, 15) aneinander befestigt sind.

3. Beleuchtungseinheit nach Anspruch 2, bei der sich das doppelseitige Klebeband (15, 17) im Wesentlichen wenigstens über eine ganze Oberfläche des Abstandshalters (7) mit Ausnahme der Aussparungen (19, 21) für die Leuchtelemente (1) und die Schaltelemente (3) erstreckt.

4. Beleuchtungseinheit nach einem der Ansprüche 1 bis 3, mit einer Grundplatte (11) auf der dem Lichtverteilerelement (9) abgewandten Seite der Leiterplatte (5).

5. Beleuchtungseinheit nach einem der Ansprüche 1 bis 4, bei der die Leuchtelemente Leuchtdioden (1) umfassen.

6. Beleuchtungseinheit nach einem der Ansprüche 1 bis 5, bei der die Schaltelemente Mikrotaster (3) umfassen.

7. Beleuchtungseinheit nach einem der Ansprüche 1 bis 6, die von flexibler Vergussmasse (13) umgeben ist.

8. Beleuchtungseinheit nach einem der Ansprüche 1 bis 7, bei der der flexible Abstandshalter (7) Schaumstoff, vorzugsweise in Form einer gestanzten Schaumstoffmatte, umfasst.

9. Kennzeichenbeleuchtung mit einer Beleuchtungseinheit nach einem der Ansprüche 1 bis 8.

10. Kennzeichenbeleuchtung nach Anspruch 9, bei der das wenigstens eine Schaltelement (3) zur Öffnung einer Fahrzeugklappe dient.

11. Öffnungsvorrichtung für eine Fahrzeugklappe mit einer Beleuchtungseinheit nach einem der Ansprüche 1 bis 8.

12. Öffnungsvorrichtung nach Anspruch 11, bei der die Beleuchtungseinheit als Kennzeichenbeleuchtung dient.

## Geänderte Patentansprüche

### Geänderte Patentansprüche gemäss Regel 86(2) EPÜ.

**1.** Beleuchtungseinheit mit Schaltfunktion, die folgendes aufweist:
- eine Leiterplatte (5) mit wenigstens einem Leuchtelement (1) und mehreren Schaltelementen (3),
- ein lang gestrecktes Lichtverteilerelement (9) und
- einen flexiblen, vorzugsweise einstückigen Abstandshalter (7) zwischen Leiterplatte (5) und Lichtverteilerelement (9) mit Aussparungen (19, 21) zur Aufnahme des wenigstens einen Leuchtelementes (1) und der Schaltelemente (3), wobei das Lichtverteilerelement (9) derart angeordnet und/oder ausgestaltet ist, dass es von außen applizierten Druck an die Schaltelemente (3) weitergibt, wobei das Lichtverteilerelement (9) so ausgestaltet ist, dass eine gleichmäßige Schaltwirkung unabhängig davon erhalten wird, an welcher Stelle auf das Lichtverteilerelement (9) gedrückt wird.
